# EUROPÄISCHE PATENTANMELDUNG

(11) **EP 0 925 724 A2**
(43) Veröffentlichungstag der Anmeldung: **30.06.1999**
(21) Anmeldenummer: 98890378.7
(22) Anmeldetag: 22.12.1998
(51) Int. Cl.: A23L 1/015, C11B 1/10, A62D 3/00, B01D 11/02

(54) **Verfahren zur Extraktion von Pflanzenschutzmitteln und/oder Reduzierung von unerwünschten Begleitstoffen aus Getreide**

(30) Priorität: 23.12.1997 AT 218497
(71) Anmelder: NATEX Prozesstechnologie GesmbH, A-2630 Ternitz (AT); Five King Cereals Industry Co., Ltd., Yi Chu Hsiang, Chia Yi Hsien 624 (TW)
(72) Erfinder: Lack, Eduard Dr., 2700 Wr. Neustadt (AT); Seidlitz, Helmut Dipl.Ing., 2630 Ternitz (AT); Lang, Franz Ing., 2632 Wimpassing (AT); Glanz, Ernst Ing., 2840 Grimmenstein (AT); Trukses, Albert Ing., 2640 Enzenreith (AT); Liaw, Yi-Jen Dr. p.A.Five King Cereals Ind.Co.LTD., Yi Chu Hsiang Chia Yi Hsien 624 (TW)
(74) Vertreter: Haffner, Thomas M., Dr.

(57) **Zusammenfassung**

Bei einem Verfahren zur Extraktion von Pflanzenschutzmitteln und/oder Reduzierung von unerwünschten Begleitstoffen, sowie von fetten Ölen und Wachsen von Getreiden, wie z.B. Reis, wird das Einsatzmaterial im Rohzustand, vorgetrocknet, mittels flüssigem oder überkritischem CO₂ bei einem Druck zwischen 40 und 500 bar und einer Temperatur zwischen 5 und 80°C, gegebenenfalls unter Zusatz von Schleppmitteln extrahiert. Das Extrakt wird entweder isobar mittels Waschkolonne oder festem Adsorptionsmittel, oder 2-stufig durch Druckabsenkung mittels Vorabscheider und Waschkolonne aus dem CO₂ entfernt.

## Beschreibung

Die Erfindung beinhaltet ein Verfahren zur Extraktion von Pflanzenschutzmitteln und/oder Reduzierung von unerwünschten Begleitstoffen, sowie von fetten Ölen und Wachsen von Getreiden, wie z.B. Reis.

In zahlreichen Naturstoffen befinden sich Rückstände von Pflanzenschutzmitteln, die verständlicherweise auf Grund ihrer möglichen Auswirkungen auf den menschlichen/tierischen Organismus unerwünscht sind. Derartige Rückstände sind trotz Verringerung der Pestizidanwendung oder durch Züchtung von schädlingsresistenten Pflanzen unvermeidbar und werden, sofern diese als Nahrungsmittel verwendet werden, in den meisten Ländern überwacht bzw. gesetzlich vorgeschrieben.

Zur Reduzierung solcher Rückstände kommen nur physiologisch unbedenkliche Lösungsmittel in Frage, welche keine Rückstände im Lebensmittel hinterlassen.

Verfahren dieser Art, d.h. Entfernung unerwünschter Rückstände, sind bereits in der Literatur zu finden. So wird beispielsweise im Buch "Verdichtete Gase zur Extraktion und Raffination", Springer Verlag (1987), S. 231 - 233, die Dekontaminierung von Drogen beschrieben, wobei als Anwendungsbeispiel die Pflanzenschutzmittelreduzierung an Sennesblättern mittels trockenem CO₂ im überkritschen Zustand angeführt wird.

In der DE-OS 36 32 401 wird ein 2-stufiges Verfahren beschrieben, wobei pestizidbelasteter Hopfen mittels verdichteter Gase vorerst extrahiert und anschließend die Pestizide aus dem Extrakt mit Hilfe von festen Adsorptionsmitteln abgetrennt werden.

In der EP O 382 116 A2 wird ein Verfahren zur Pestizidentfernung mittels überkritischem Kohlendioxid von Ginseng beschrieben, wobei die ganze oder gemahlene Pflanze vor der Extraktion auf einen Feuchtegehalt zwischen 14 bis 65 Gew.% eingestellt wird.

Die DE 43 42 874 A1 beschreibt ebenfalls ein Verfahren bezogen auf die Entfernung von unpolaren Inhaltsstoffen aus luftgetrocknetem Gingseng mittels überkritischem Kohlendioxid, dem jedoch Aceton als Schleppmittel zugesetzt werden kann und vor dem Extraktoreintritt mit Wasser befeuchtet wird.

Showa 60-188053 behandelt ein Verfahren zur Aufbereitung von Reis zur Reisweingewinnung, wobei trockenes CO₂ zur Entfettung des Reises verwendet wird. Dabei werden an Vorteilen eine höhere Ausbeute an Reiswein bei verbesserter Qualität, sowie die Möglichkeit der Gewinnung von Reisschalenöl angeführt.

In der DE-OS 31 14 783 wird ein Verfahren zur Geschmacksverbesserung von Johannisbrotmehl durch Entfernung von unerwünschten Begleitsubstanzen mit Kohlendioxid beschrieben.

Eine erfolgreiche Übertragung der oben zitierten Verfahren auf die Pestizidentfernung aus Getreide, beispielshaft Reis, ist nicht möglich. Die Verwendung von ausschließlich "trockenem" CO₂ verlängert die Extraktionszeit enorm (bzw. erhöht den CO₂ Durchsatz entsprechend) und führt zu einer beträchtlichen Austrocknung des Einsatzgutes und demzufolge zu einer Geschmacksveränderung im negativen Sinn, sowie zu einer Versprödung vor allem des Reises, die beim Polieren unweigerlich zu Kornbruch führt. Außerdem kann, je nach Art der Pestizidzusammensetzung nicht immer eine ausreichende Reduzierung erzielt werden. Die beiden angeführten Verfahren zur Ginsengbehandlung sind ebenfalls nicht geeignet, da der zur Extraktion kennzeichnende Temperaturbereich zwischen 60 - 90°C eine beträchtliche negative Auswirkung auf den Geschmack des Getreides, vor allem Reis, ausübt, bzw. in Kombination mit den hohen erforderlichen Wasserzusätzen, unabhängig ob als Entrainer zum CO₂ oder zum Anfeuchten des Einsatzgutes verwendet, ein "Verkochen" des Reises zur Folge hat.

Die gegenständliche Erfindung zielt nun darauf ab, ein Verfahren der eingangs erwähnten Art zu schaffen, welches die oben genannten Nachteile ausschließt und die Qualitätsmerkmale des unbehandelten Getreides, beispielshaft Reis, zusätzlich verbessern kann.

Diese Aufgabe wurde erfindungsgemäß dadurch gelöst, daß das Einsatzmaterial mit einem Feuchtigkeitsgehalt von 5 - 30 Gew.% im Rohzustand, vorgetrocknet oder durch Wasserzugabe auf den geforderten Wert eingestellt, mittels flüssigem oder überkritischem CO₂ bei einem Druck zwischen 40 und 360 bar und einer Temperatur zwischen 5 und 60°C, gegebenenfalls unter Zusatz von Schleppmitteln extrahiert und das Extrakt entweder isobar mittels Waschkolonne oder festem Adsorptionsmittel, oder 2-stufig durch Druckabsenkung mittels Vorabscheider und Waschkolonne aus dem CO₂ entfernt wird. Mit dem Einsatz von flüssigem oder überkritischem CO₂ als Extraktionsmittel für Pflanzenschutzmittel und unerwünschten Begleitstoffen sowie fetten Ölen und Wachsen von Getreiden wird ein physiologisch unbedenkliches, nicht brennbares, selektiv und bei Normaldruck gasförmiges Lösungsmittel bereitgestellt, welches zudem rückstandslos aus dem Getreide verdampft. Durch die erfindungsgemäßen Verfahrensschritte und insbesondere durch den Feuchtigkeitsgehalt des Einsalzmaterials von 5 - 30 Gew.% sowie den gewählten Druck- und Temperaturbedingungen können Pflanzenschutzmittel sowie unerwünschte Begleitstoffe rasch und schonend und im wesentlichen ohne Geschmacksveränderung des Einsatzmateriales in überaus hohem Maße entfernt werden. Bedingt durch die Entfernung von Reisfetten und -ölen ergibt sich zudem eine Qualitätsverbesserung in Bezug auf Geschmack und Lagerfähigkeit, sodaß der erfindungsgemäße Prozeß ein ausgezeichnetes Rohmaterial zur Reisweingewinnung und Zusatzstoff zur Bierbrauung liefert.

Die Abtrennung der Extrakte erfolgt entweder isobar in einer Adsorptionseinrichtung oder in einer Waschkolonne, wo die Extrakte im Gegenstrom zum CO₂ mit Wasser ausgewaschen werden, oder durch Druckabsenkung in einen Entspannungsbehälter. Eine Druckabsenkung wird bevorzugt zweistufig durchgeführt, wobei im ersten Abscheider der Großteil der Extrakte anfällt und in einem zweiten Schritt mit Hilfe einer Waschkolonne die restlichen Verunreinigungen aus dem nun gasförmigen Kohlendioxidstrom abgeschieden werden. Mit Hilfe dieser zweistufigen Abscheidung kann eine äußerst geringfügige Restbeladung im Kohlendioxid erreicht werden. Diese ist erforderlich, um auch geringste verbleibende Restkontaminierungen des Einsatzstoffes zu gewährleisten.

Bevorzugt wird das Verfahren so durchgeführt, daß das Einsatzprodukt mit einem Feuchtigkeitsgehalt von 10 - 20 % eingesetzt wird, wobei mit diesen Feuchtigkeitsgehalten des Einsatzmaterials eine optimale Entfernung von Pflanzenschutzmitteln sowie unerwünschten Begleitstoffen gelingt. Bevorzugt wird das Einsatzprodukt im Erntezustand ungeschält oder geschält, poliert oder unpoliert eingesetzt und kann als ganzes Korn, Bruchkorn oder im gemahlenen Zustand extrahiert werden. Dabei wird das Einsatzprodukt bevorzugt mit Schleppmitteln, vorzugsweise Aceton, Ethanol, Methanol, Äthylacetat, Äthan, Äthylen, Propan, Butan versetzt, wobei auch dem CO₂ Schleppmittel, vorzugsweise Wasser und/oder Aceton, Äthanol, Methanol, Äthylacetat, Äthan, Äthylen, Propan, Butan oder deren Gemische beigemischt werden können. Die Befeuchtung des CO₂ mit Schleppmittel kann dabei kontinuierlich oder diskontinuierlich bis zur teilweisen oder vollständigen Sättigung erfolgen. Es zeigt sich, daß bei zunehmendem Feuchtigkeitsgehalt, bei sonst gleichen Extraktionsbedingungen, die Restkontamination stark ansteigt. Diese beträgt bei den untersuchten Pestiziden im Durchschnitt ca. das 1,8-fache bei einer Anfangsfeuchte von 25 % im Vergleich zu 10 - 15 %. Anfeuchten des CO₂ mit Wasser ergibt nur bei geringer Zudosierung (0,5 - 1,5 Vol.%), d.h. nur zur Aufrechterhaltung der Reisfeuchtigkeit eine Verbesserung, während in der Nähe der Sättigung z.T. beträchtliche Verschlechterung der Reduzierung erfolgt.

Im Rahmen der zu untersuchenden Pestizide liegt der optimale Druckbereich der Extraktion je nach der Zusammensetzung der Kontaminierung im Bereich zwischen 100 - 250 bar, womit der bevorzugte Druckbereich zwischen 100 und 250 bar liegt. Höhere Drücke führten bei den untersuchten Pestiziden überraschenderweise zu unbefriedigenden Ergebnissen, so beträgt die Reduzierung nur ca 25 % bei Drücken von 350 bar und höher bei derselben CO₂-Durchsatzmenge, wobei jedoch niedrigere Extraktionstemperaturen, z.B. 40°C bessere Ergebnisse erzielen im Vergleich zu 50°C.

Eine besonders geringe Geschmacksveränderung ist feststellbar, wenn die Extraktionstemperatur zwischen 30 und 50° liegt.

Das erfindungsgemäße Verfahren soll anhand von Beispielen erläutert werden, ohne jedoch auf die verwendeten Bedingungen begrenzt zu sein. Für die Versuche wurde jeweils vorgetrockneter und künstlich mit Pestiziden angereicherter Reis (ca. 15 % Feuchtigkeit) unterschiedlicher Menge und Kontaminierung eingesetzt. Die Rückstände wurden mittels HPLC analysiert.

### Beispiel 1

3 kg ungeschälter, künstlich pestizidbeladener Reis wurde 1 h bei 100 bar und 40°C extrahiert. Die Abscheidung erfolgte 2-stufig im gasförmigen Zustand wobei in der 2. Stufe Aktivkohle als Adsorptionsmittel verwendet wurde. Vor dem Extraktor wurde das Kohlendioxid auf 1 Vol.% Feuchtigkeit eingestellt. Nach der Extraktion wurde der Extraktor entspannt und der Reis entnommen. Die Rückstände wurden analysiert und mit den Ausgangswerten in der Tab. 1 zusammengestellt. Die Gesamtreduktion lag über 85 %.

### Beispiel 2, 3 und 4

Die Versuche wurden wie im Beispiel 1 beschrieben durchgeführt, jedoch der Extraktionsdruck auf 170, 250, 350 bar erhöht. Die Ergebnisse sind wieder in Tab. 1 ersichtlich.

### Beispiel 5, 6, 7 und 8

Die Versuche wurden wie im Beispiel 1, 2, 3 und 4 beschrieben durchgeführt, jedoch die Temperatur jeweils auf 50°C erhöht. Die Ergebnisse finden sich in Tab. 1.

### Beispiel 9, 10, 11 und 12

Die Versuche wurden wie im Beispiel 1 beschrieben durchgeführt, jedoch mit dem Unterschied, daß der Feuchtegehalt des Reises mit 10, 15, 20 und 25 % eingestellt wurde.

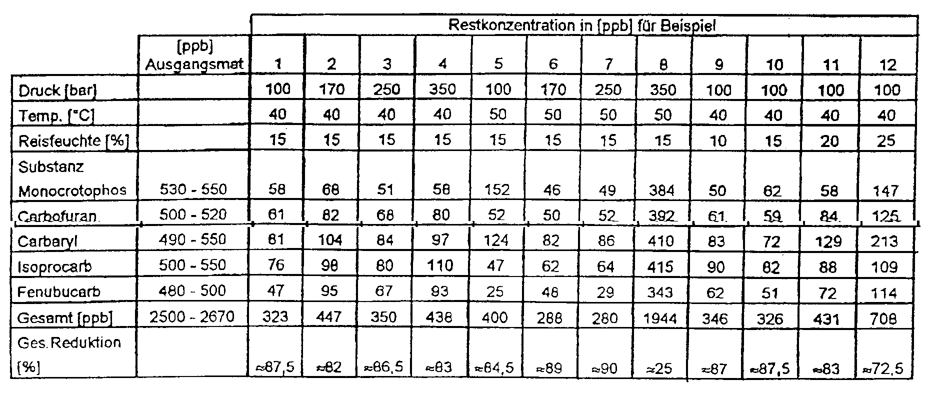

### Beispiele 13 bis 20

Weitere Versuche unter den gleichen Versuchsbedingungen wie in Beispiel 1 bis 8, jedoch mit höheren Ausgangskonzentrationen an Pestizid (ca. 1000 und 2000 ppb per Pestizid) ergaben eine Reduzierung von über 90 % für einen Druckbereich von 100 bis 250 bar.

### Beispiele 21 bis 26

Die Versuche wurden wie in Beispiel 1 - 3 und 5 - 7 beschrieben durchgeführt, jedoch wurde anstatt der Abscheidung mit Aktivkohle eine Waschkolonne verwendet. Damit konnte eine Gesamtreduktion von über 90 % erreicht werden.

### Beispiele 27 und 28

Die Versuche wurden wie im Versuch 1 und 2 beschrieben durchgeführt, jedoch die Wasserzudosierung zum CO₂ wurde auf ca. 2 Vol % eingestellt. Dabei wurde festgestellt. daß die verbleibende Restkonzentration an Pestiziden im Durchschnitt um ca. 10 % höher lag.

Bei allen oben genannten Beispielen konnte eine zumindest gleichbleibende Geschmacksqualität erzielt werden. Die Lagerungsfähigkeit des Reises konnte durch die Reduzierung der Reisöle/-fette verbessert werden. Bei Versuchen, bei welchen die Reisfeuchtigkeit bei der Extraktion konstant gehalten wurde, konnte keine Bruchanfälligkeit bei anschließender Polierung festgestellt werden. Der extrahierte Reis erscheint zur Produktion von Reiswein bestens geeignet.

Mit Erhöhung des CO₂ Durchsatzes, bzw. längeren Extraktionszeiten kann eine Gesamtreduzierung von 95 % und höher erreicht werden.

## Patentansprüche

1. Verfahren zur Extraktion von Pflanzenschutzmitteln und/oder Reduzierung von unerwünschten Begleitstoffen, sowie von fetten Ölen und Wachsen von Getreiden, wie z.B. Reis, dadurch gekennzeichnet, daß das Einsatzmaterial mit einem Feuchtigkeitsgehalt von 5 - 30 Gew.% im Rohzustand, vorgetrocknet oder durch Wasserzugabe auf den geforderten Wert eingestellt, mittels flüssigem oder überkritischem CO₂ bei einem Druck zwischen 40 und 360 bar und einer Temperatur zwischen 5 und 60°C, gegebenenfalls unter Zusatz von Schleppmitteln extrahiert und das Extrakt entweder isobar mittels Waschkolonne oder festem Adsorptionsmittel, oder 2-stufig durch Druckabsenkung mittels Vorabscheider und Waschkolonne aus dem CO₂ entfernt wird.

2. Verfahren nach Anspruch 1, dadurch gekennzeichnet, daß das Einsatzprodukt mit einem Feuchtigkeitsgehalt von 10 - 20 % eingesetzt wird.

3. Verfahren nach Anspruch 1 und 2, dadurch gekennzeichnet, daß das Einsatzprodukt im Erntezustand ungeschält oder geschält, poliert oder unpoliert eingesetzt wird.

4. Verfahren nach einem der Ansprüche 1 bis 3, dadurch gekennzeichnet, daß das Einsatzprodukt mit Schleppmitteln, vorzugsweise Aceton, Ethanol, Methanol, Äthylacetat, Äthan, Äthylen, Propan, Butan versetzt wird.

5. Verfahren nach einem der Ansprüche 1 bis 4, dadurch gekennzeichnet, daß der Extraktionsdruck zwischen 100 und 250 bar liegt.

6. Verfahren nach einem der Ansprüche 1 bis 5, dadurch gekennzeichnet, daß die Extraktionstemperatur zwischen 30 und 50°C liegt.

7. Verfahren nach einem der Ansprüche 1 bis 6, dadurch gekennzeichnet, daß dem CO₂ Schleppmittel, vorzugsweise Wasser und/oder Aceton, Äthanol, Methanol, Äthylacetat, Äthan, Äthylen, Propan, Butan oder deren Gemische beigemischt werden.

8. Verfahren nach einem der Ansprüche 1 bis 7, dadurch gekennzeichnet, daß die Befeuchtung des CO₂ mit Schleppmittel kontinuierlich, oder diskontinuierlich bis zur teilweisen oder vollständigen Sättigung erfolgt.

9. Verfahren nach einem der Ansprüche 1 bis 8, dadurch gekennzeichnet, daß bei einer Abtrennung des Extraktes aus dem CO₂ durch 2-stufige Druckabsenkung mittels Vorabscheider und Waschkolonne die Extraktabscheidung aus der Gasphase erfolgt.

10. Verfahren nach einem der Ansprüche 1 bis 9, dadurch gekennzeichnet, daß das Einsatzprodukt als ganzes Korn, Bruchkorn oder im gemahlenen Zustand extrahiert wird.
